# EUROPEAN PATENT SPECIFICATION

(11) **EP 2 803 048 B1**
(45) Date of publication and mention of the grant of the patent: **05.08.2020**
(21) Application number: 13735599.6
(22) Date of filing: 09.01.2013
(51) Int. Cl.: G07C 5/08, G05B 23/02, G05B 19/048

(54) **SYSTEM AND METHOD FOR PROVIDING DIAGNOSTIC FAULT INFORMATION**
SYSTEM UND VERFAHREN ZUR BEREITSTELLUNG DIAGNOSTISCHER FEHLERINFORMATION
SYSTÈME ET PROCÉDÉ POUR FOURNIR DES INFORMATIONS DE DIAGNOSTIC DE DÉFAUTS

(30) Priority: 13.01.2012 SE 1250016
(43) Date of publication of application: 19.11.2014
(73) Proprietor: Scania CV AB, 151 87 Södertälje (SE)
(72) Inventor: BITEUS, Jonas, 155 30 Nykvarn (SE); NYBERG, Mattias, 125 57 Älvsjö (SE); IVENDAL, Hans, 117 26 Stockholm (SE)
(74) Representative: Scania CV AB
(86) International application number: PCT/SE2013/050006
(87) International publication number: WO 2013/105891

(56) References cited:
- WO-A2-2008/063818
- US-A1- 2005 159 923
- US-A1- 2009 006 476
- US-A1- 2009 006 476
- US-A1- 2009 259 358
- US-A1- 2011 225 096
- US-A1- 2011 246 018

## Description

### BACKGROUND TO THE INVENTION AND PRIOR ART

The present invention relates generally to the identification and rectification of faults in motor vehicles.

Today's motor vehicles are very complex technical systems supervised by automatic functions. In for example heavy vehicles, e.g. trucks and buses, a unit or group of units is usually controlled by means of electronic control units (ECUs) which are connected to the units via a communication bus. Any faults in each of the vehicle's components and units may thereby be detected via respective ECUs which look after them, and be reported in the course of troubleshooting to a central location in the form of standardised fault codes, e.g. DTCs (*diagnostic trouble codes*).

US 2005/159923 discloses a vehicular diagnostic tools suitable for use with multiple types of vehicles but without the requirement for data compression techniques to store diagnostic codes.

DE 10 2007 010 978 A1 describes a solution for fault diagnosis whereby a Bayesian network defines the cause and effect relationship between components and fault events. An evaluation unit evaluates the Bayesian network and determines a dependency value for the fault in each component. The evaluation unit generates a list of faulty components which is sorted on the basis of the dependency value. A user, e.g. a repairer, is provided with the list via an output unit.

US 2009/0006476 refers to an experience-based (*case based*) system for processing of vehicle diagnostic data with the object of identifying remedial measures deemed likely to rectify faults detected in a vehicle. The processing is conducted remotely, away from the vehicle, and involves ranking the identified remedial measures by matching in a database of previously received diagnostic data and associated remedial measures. The remedial measure associated with the highest ranking combination of diagnostic data is regarded as being the most likely to solve the fault detected. The most likely remedial measure is reproduced on a vehicle repair database, resulting in the extraction of a corresponding repair procedure for the most likely remedial measure.

EP 1 895 377 A1 refers to a fault diagnosis solution for a complex system comprising a plurality of components each regarded as potentially being in any of the states of health described as "normal", "suspected faulty" or "confirmed faulty". On the basis of the results of tests, minimal conflicts which clarify the test results are identified. A respective readiness status is derived which indicates a definitive value or a non-definitive value depending on whether or not further testing of a component is expected to alter its state of health. In the case of a non-definitive value, future minimal conflicts are identified which express every combination of potentially faulty components which is consistent with a current range of minimal conflicts. The minimal conflicts serve as a basis for determining the further tests which might potentially produce results such as to cause said readiness status to change to the definitive value for one or more of the components. A status report is generated after evaluation of at least one of the further tests. Reliable diagnoses may thus also be arrived at for very complex systems, e.g. modern motor vehicles. It is also possible in a given situation to decide whether continued testing is sensible or not.

### PROBLEM ASSOCIATED WITH PRIOR ART

Although the above solutions have many advantageous characteristics, there is no effective solution for presenting appropriate information for a user of a diagnostic tool, e.g. a repairer, when two or more faults in a motor vehicle occur at the same time.

### SUMMARY OF THE INVENTION

The object of the present invention is therefore to propose a solution which solves the above problem, according to the independent claims.

The system described comprises a database containing at least one range of information items. Each information item is here associated with a certain fault code. The processing unit is configured to generate the diagnostic fault information dynamically on the basis of at least one fault code received and at least one information item therewith associated from the database.

This system is advantageous in that the proposed dynamically generated fault information may be adapted to convey a composite picture of all of the fault codes concerned. Moreover, any redundant information overlapping from two or more fault codes is eliminated, thereby improving the relevance of the information presented and consequently leading to a shorter average expected fault rectification time.

In one embodiment of this aspect of the invention, the processing unit is configured, if more than one fault code is received from the vehicle, to generate diagnostic fault information concerning a current fault code on the basis of at least one information item pertaining to the current fault code and at least one information item pertaining to at least one other of said fault codes received. Synergy effects as described above are thus achieved.

In an optional embodiment the processing unit is configured, if more than one fault code is received from the vehicle, to calculate a respective probability rating for each information item pertaining to a current fault code, and to generate diagnostic fault information concerning a current fault code, in such a way that information based on at least one information item pertaining to the current fault code with a relatively high probability is given a higher ranking than information based on one or more information items pertaining to the current fault code with only relatively low probability. This is advantageous in making it easier for the user to assimilate effectively and appropriately the information presented.

In yet another embodiment the processing unit is configured, if two or more information items have the same calculated probability rating, to generate diagnostic fault information concerning a fault code which incorporates said information items in such a way that the diagnostic fault information presented has its content ranked in an *a priori* order of probability for said two or more information items. The information presentation is thus given a further enhanced relevance.

In a further embodiment each of said information items is regarded as comprising at least one suggested cause pertaining to respective fault codes. The processing unit is further configured to include in diagnostic fault information concerning a certain fault code at least one suggested cause pertaining to that fault code. This is desirable in making it easier for a repairer to rectify the current fault.

If more than one fault code is received from the vehicle, the processing unit is with advantage also configured to generate diagnostic fault information concerning a current fault code in such a way as to include at least one suggested cause pertaining to at least one fault code in addition to the current fault code, thereby further simplifying the repairer's prioritisation of his/her work.

In a further embodiment, the processing unit is configured to calculate a respective probability rating for each suggested cause pertaining to a current fault code, and to rank the suggested causes in the diagnostic fault information in such a way that a suggested cause which pertains to the current fault code with a relatively high probability is given a higher ranking than a suggested cause which pertains to the current fault code with a relatively low probability. In a similar way to that indicated above, the information presentation is thus given an enhanced relevance and the repairer's work prioritisation is facilitated. If however two or more suggested causes pertaining to a current fault code have the same calculated probability rating, the processing unit is with advantage configured to rank them in an *a priori* order of their probability.

In yet another embodiment, each of said information items is regarded as comprising at least one suggested remedy pertaining to respective fault codes. The processing unit is in this case configured to include in diagnostic fault information concerning a certain fault code at least one suggested remedy pertaining to that fault code. An average expected fault rectification time may thus be considerably shortened.

In a further embodiment, the processing unit is configured, if more than one fault code is received from the vehicle, to generate diagnostic fault information concerning a current fault code in such a way as to include at least one suggested remedy pertaining to at least one fault code in addition to the current fault code. This likewise helps to improve the repairer's work situation and shorten the average expected fault rectification time.

In a further embodiment, the processing unit is configured to calculate a respective probability rating for each suggested remedy pertaining to a current fault code. The processing unit is also configured to rank the suggested remedies in the diagnostic fault information in such a way that a suggested remedy which pertains to the current fault code with a relatively high probability is given a higher ranking than a suggested remedy which pertains to the current fault code with a relatively low probability. In a similar way to that indicated above, the presentation of suggested remedies is thus likewise given an enhanced relevance, facilitating the repairer's work.

### BRIEF DESCRIPTION OF THE DRAWINGS

The present invention will now be explained in more detail on the basis of embodiments described by way of examples and with reference to the attached drawings.
- Figure 1: is a schematic diagram of a motor vehicle connected to the proposed diagnostic system,
- Figure 2: illustrates graphically how diagnostic fault information is assembled and presented according to an embodiment of the invention, and
- Figure 3: is a flowchart illustrating the general method according to the invention.

### DESCRIPTION OF EMBODIMENTS OF THE INVENTION

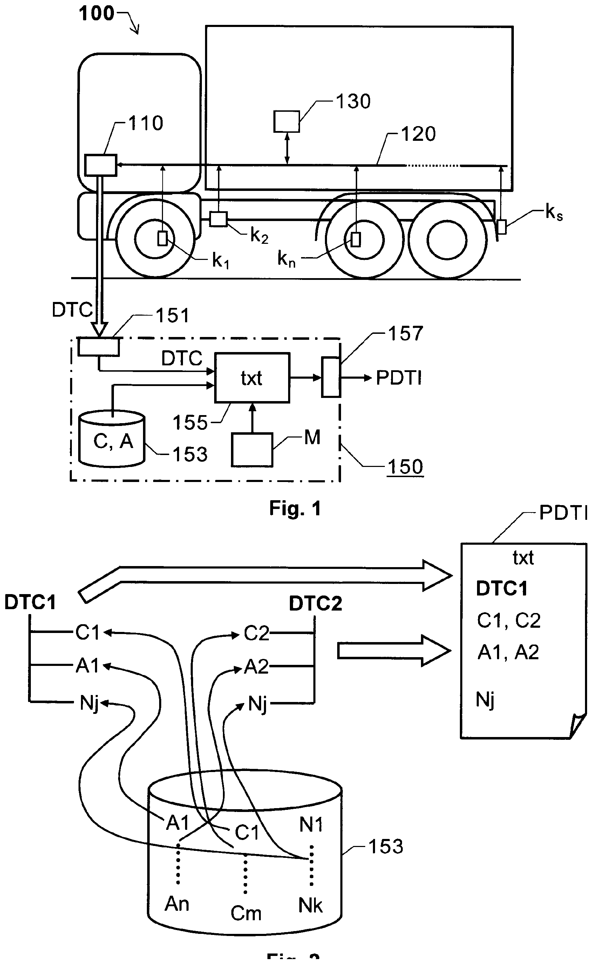

We refer initially to Figures 1 and 2. Figure 1 is a schematic diagram of a motor vehicle 100 connected to a system 150 for provision of diagnostic fault information PDTI according to the invention. Figure 2 illustrates graphically how diagnostic fault information PDTI is assembled and presented according to an embodiment of the invention.

The vehicle 100 comprises here a number of components k₁, k₂, ..., kₙ, ..., kₛ. A first ECU 110 looks after a first group of components k₁ and k₂, a second ECU 130 looks after a second group of components kₙ, ..., kₛ, and communication between components k₁, k₂, ..., kₙ, ..., kₛ and the ECUs 110 and 130 takes place across a communication bus 120. The first ECU 110 is regarded as being also equipped with an interface for external data communication, e.g. for conveying fault codes DTC to the proposed system 150. Alternatively, the system 150 may be integrated in the vehicle 100.

In any case, the system 150 comprises a processing unit 155, a database 153 and an output interface 157.

The database 153 contains at least one range of information items C, A each pertaining to a certain fault code DTC. A first type of information item C may here comprise information concerning faults detected, whereas a second type of information item A describes recommended fault rectifying measures.

The processing unit 155 is configured, to receive fault codes DTC from the vehicle 100, e.g. via an input interface 151. Each fault code received DTC is regarded as associated with a unique identity (e.g. a specific number, a number of characters or a combination thereof) for unambiguous identification. The processing unit is configured to generate the diagnostic fault information PDTI dynamically on the basis of at least one fault code received DTC and at least one information item C and/or A thereto pertaining from the database 153. It is further configured to provide the diagnostic fault information PDTI via the output interface 157 for presentation for a user. Continued automatic processing of the fault information PDTI, e.g. for the production of various forms of statistical data, is of course not ruled out.

Should the vehicle 100 be affected by multiple faults so that the input interface 151 receives more than one fault code DTC1 and DTC2 from the vehicle, the processing unit is configured in one embodiment of the invention to generate diagnostic fault information PDTI concerning a current fault code DTC2 on the basis of at least one information item C2 and A2 pertaining to the current fault code DTC2 and at least one information item C1 and A1 pertaining to at least one other of said fault codes received DTC1.

If more than one fault code DTC1 and DTC2 are received from the vehicle, the processing unit is with advantage also configured to calculate a respective probability rating for each information item pertaining to a current fault code, say DTC1.

In another embodiment of the invention, each information item comprises at least one suggested cause C1 and C2 pertaining specifically to respective fault codes DTC1 and DTC2. The processing unit is further configured to include in diagnostic fault information PDTI concerning a certain fault code DTC1 at least one suggested cause C1 pertaining to that fault code.

If more than one fault code DTC1 and DTC2 are received from the vehicle, the processing unit is with advantage configured to generate diagnostic fault information PDTI concerning a current fault code DTC2 in such a way that the diagnostic fault information PDTI includes at least one suggested cause C1 pertaining to at least one fault code DTC1 in addition to the current fault code DTC2. This fault information PDTI is with advantage generated by the processing unit at the time when the current fault code DTC2 is chosen/marked by a user via a user interface, e.g. by marking of the fault code DTC2 on a screen.

In one embodiment of the invention, the processing unit is configured to calculate a respective probability rating for each suggested cause C1 and C2 pertaining to a current fault code DTC2. It is further configured to rank the suggested causes in the diagnostic fault information PDTI in such a way that a suggested cause C1 which pertains to the current fault code DTC2 and is of relatively high probability is given a higher ranking than a suggested cause C2 which pertains to the current fault code DTC2 but is of relatively low probability. This may for example mean that C1 appears before/ahead of/above C2. Figure 2 illustrates an example where information concerning a first detected fault C1 appears before information concerning a second detected fault C2.

It is generally preferable that the processing unit be configured to generate diagnostic fault information PDTI concerning a current fault code, here DTC1, in such a way that information based on at least one information item which pertains to the current fault code DTC1 and is of relatively high probability is given a higher ranking than information based on one or more information items which pertain to the current fault code DTC1 but is of only relatively low probability.

Should two or more information items appear with the same calculated probability rating, the processing unit is configured in one embodiment of the invention to generate the diagnostic fault information PDTI on the basis of *a priori* probabilities. This means for example that it may be configured to generate diagnostic fault information PDTI concerning a fault code DTC2 incorporating information items C1 and C2 in such a way that the diagnostic fault information PDTI presented has its content ranked in an *a priori* order of their probability.

Two or more suggested causes C1 and C2 pertaining to a current fault code DTC2 may have the same calculated probability rating. In such cases the processing unit is configured in one embodiment of the invention to rank the suggested causes C1 and C2 in an *a priori* order of their probability. The *a priori* probability P for a certain fault F and a certain fault code DTC is given by P(F | DTC validated). Similarly, a strength P for the fault F given the fault code DTC is indicated as P(DTC validated | F).

Given a set of validated fault codes (i.e. fault codes whose validity is regarded as strong) and relating information (e.g. suggested causes), the processing unit in one embodiment of the invention calculates first the so-called minimal cardinality diagnoses, e.g. in accordance with [3] Reiter, R., "A theory of diagnosis from first principles. Artificial Intelligence", 32(1):57-95, April 1987, DOI:10.1016/0004-3702 (87) 90062-2 and Biteus, J. et al., "An algorithm for computing the diagnoses with minimal cardinality in a distributed system", Engineering Applications of Artificial Intelligence, 21(2): pp 269-276, March 2008.DOI:10.1016/ j.engappai. 2007.03.006. The likely fault for a marked fault code DTC corresponds here to the intersection between the set of minimal cardinality diagnoses and the set of possible causes for the marked fault code DTC. The least likely faults for the marked fault code DTC are the complement to the set of the likely faults with respect to the set of possible causes for the marked fault code DTC. The likely and less likely causes are sorted in declining order given the *a priori* probability of the cause, assuming that the marked fault code DTC is validated.

In another embodiment of the invention, each information item comprises also at least one suggested remedy A1 and A2 pertaining to respective fault codes DTC1 and DTC2. The processing unit is here configured to include in diagnostic fault information PDTI concerning a certain fault code, e.g. DTC1, at least one suggested remedy A1 pertaining to that fault code.

If more than one fault code, e.g. DTC1 and DTC2, are received from the vehicle, the processing unit is with advantage configured, in a similar way to that indicated above, to generate diagnostic fault information PDTI concerning a current fault code, say DTC2, in such a way that the diagnostic fault information PDTI at the time of marking of the current fault code DTC2 includes also at least one suggested remedy A1 pertaining to at least one fault code DTC1 in addition to the current fault code DTC2. It should be noted that a prerequisite for this is that there is also some form of connection between the fault code DTC2 and the suggested remedy A1.

In one embodiment of the invention, the processing unit is specifically configured to calculate a respective probability rating for each suggested remedy A1 and A2 pertaining to a current fault code DTC2. It is further configured to rank the suggested remedies A1 and A2 in the diagnostic fault information PDTI in such a way that a suggested remedy, say A1, which pertains to the current fault code DTC2 and is of relatively high probability is given a higher ranking than a suggested remedy, say A2, which pertains to the current fault code DTC2 but is of relatively low probability. A1 may thus here be presented before/in front of/above A2.

The diagnostic fault information PDTI presented via the output interface 157 may for example comprise details in the form of fault codes DTC with designations and descriptions, such as **"FF01** - Electrical fault in fuel shutoff valve" and **"FF03** - Short-circuit of fuel shutoff valve to battery voltage". When a first of the fault codes DTC, say FF01, is chosen/marked in a corresponding input interface, the following text information txt may be presented via the output interface 157: "Detection: *Control unit indicates electrical fault on legs connected to fuel shutoff value";* "Cause: (likely fault) *air*/*fuel pressure sensor (T110) short-circuited to battery voltage,* (less likely fault) *air*/*fuel pressure sensor (T110) short-circuited to earth";* "Comment": [System reaction] diesel particle filter preventing fuel injection" and "Remedial measure": if air/fuel pressure sensor (T110) short-circuited to battery voltage, *change fuel pressure sensor (T110);* if air/fuel pressure sensor (T110) short-circuited to earth, *change fuel pressure sensor (T110).*

The way described above in which the processing unit 155 and other units and components which form part of the system 150 work is with advantage controlled by software/programmeware/a range of computer programme instructions stored in a memory unit (M) in communicative connection with the processing unit 155.

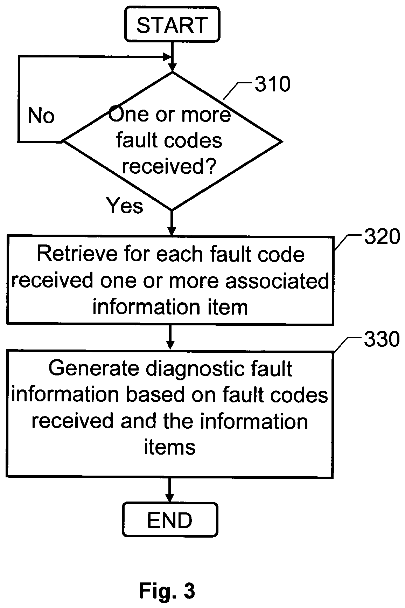

To summarise, the general method according to the invention will now be described with reference to the flowchart in Figure 3. A first step 310 investigates whether at least one fault code DTC has been received by the system. If such is not the case, the method goes back and stays at step 310 to continue investigating whether at least one fault code DTC has been received. In the opposite case, i.e. if one or more fault codes *have* been received, the method moves on to a step 320 in which at least one respective information item C, A pertaining to each fault code received DTC is retrieved from a database 153.

This is followed by a step 330 in which diagnostic fault information PDTI is generated dynamically on the basis of the at least one fault code received DTC and said at least one information item thereto pertaining. The method according to the invention thereupon ends.

The method steps described with reference to Figure 3 may be controlled by means of a programmed computer apparatus. In addition, although the embodiments of the invention described above with reference to the drawings comprise a computer and processes conducted in a computer, the invention extends to computer programmes, particularly computer programmes on or in a support suited to practical implementation of the invention. The programme may be in the form of source code, object code, a code which is intermediate between source and object code, e.g. in partly compiled form, or in any other form suitable for use in implementing the process according to the invention. The support may be any entity or device capable of carrying the programme. It may for example comprise a storage medium such as a flash memory, a ROM (read only memory), e.g. a CD (compact disc) or a semiconductor ROM, EPROM (electrically programmable ROM), EEPROM (erasable EPROM), or a magnetic recording medium, e.g. a floppy disc or hard disc. It may also be a transmitting support such as an electrical or optical signal which can be conveyed through an electrical or optical cable or via radio or in some other way. Where the programme takes the form of a signal which can be conveyed directly by a cable or some other device or means, the support may take the form of such a cable, device or means. Alternatively, the support may be an integrated circuit in which the programme is embedded, in which case the integrated circuit is adapted to conducting, or being used in the conducting of, the respective processes.

The invention is not restricted to the embodiments described with reference to the drawings but may be varied freely within the scope of the claims set out below.

## Claims

1. A system for provision of diagnostic fault information (PDTI) concerning a motor vehicle (100), the system comprises a processing unit (155) configured to receive fault codes (DTC) from the vehicle (100), each fault code received (DTC) being associated with a unique identity, and to provide the diagnostic fault information (PDTI) via an output interface (157),
**characterised in that**
the system comprises a database (153) containing at least one range of information items (C, A) which each pertain to a certain fault code (DTC), and
the processing unit (155) is configured to generate the diagnostic fault information (PDTI) dynamically on the basis of at least one fault code received (DTC) and at least one information item (C, A) thereto pertaining from the database (153) and,
if more than one fault code (DTC1, DTC2) is received from the vehicle (100) when two or more faults in the motor vehicle (100) occur at the same time, the processing unit (155) is configured to generate diagnostic fault information (PDTI) concerning a current fault code (DTC2) dynamically on the basis of at least one information item (C2, A2) pertaining to the current fault code (DTC2) and at least one information item (C1, A1) pertaining to at least one other of said fault codes received (DTC1) as well as on the basis of elimination of any redundant information overlapping from the two or more fault codes (DTC1, DTC2).

2. The system according to claim 1, in which if more than one fault code (DTC1, DTC2) is received from the vehicle (100) the processing unit (155) is configured
to calculate a respective probability rating for each information item pertaining to a current fault code (DTC2), and
to generate diagnostic fault information (PDTI) concerning a current fault code (DTC2) in such a way that information based on at least one information item which pertains to the current fault code (DTC2) and is of relatively high probability is given a higher ranking than information based on one or more information items which pertain to the current fault code (DTC2) but are of only relatively low probability.

3. The system according to claim 2, in which if two or more information items have the same calculated probability rating the processing unit (155) is configured to generate diagnostic fault information (PDTI) concerning a fault code (DTC2) incorporating said information items in such a way that the diagnostic fault information (PDTI) presented has its content ranked according to an a priori order of probability for said two or more information items.

4. The system according to claim 1, in which each of said information items comprises at least one suggested cause (C1; C2) pertaining to respective fault codes (DTC1, DTC2), and the processing unit (155) is configured to include in diagnostic fault information (PDTI) concerning a certain fault code (DTC1) at least one suggested cause (C1) pertaining to that fault code.

5. The system according to claim 4, in which if more than one fault code (DTC1, DTC2) is received from the vehicle (100) the processing unit (155) is configured to generate diagnostic fault information (PDTI) concerning a current fault code (DTC2) in such a way that the diagnostic fault information (PDTI) includes at least one suggested cause (C1) pertaining to at least one fault code (DTC1) in addition to the current fault code (DTC2).

6. The system according to claim 5, in which the processing unit(155) is configured to calculate a respective probability rating for each suggested cause (C1; C2) which pertains to a current fault code (DTC2), and
to rank the suggested causes in the diagnostic fault information (PDTI) in such a way that a suggested cause (C1) which pertains to the current fault code (DTC2) and is of relatively high probability is given a higher ranking than a suggested cause (C2) which pertains to the current fault code (DTC2) but is of relatively low probability.

7. The system according to claim 6, in which if two or more suggested causes (C1; C2) pertaining to a current fault code (DTC2) have the same calculated probability rating, the processing unit (155) is configured to mutually rank said two or more suggested causes (C1; C2) in an a priori order of their probability.

8. The system according to claim 1, in which each of said information items comprises at least one suggested remedy (A1; A2) pertaining to respective fault codes (DTC1, DTC2), and the processing unit (155) is configured to include in the diagnostic fault information (PDTI) concerning a certain fault code (DTC1) at least one suggested remedy (A1) which pertains to that fault code.

9. The system according to claim 8, in which if more than one fault code (DTC1, DTC2) is received from the vehicle (100) the processing unit (155) is configured to generate diagnostic fault information (PDTI) concerning a current fault code (DTC2) in such a way that the diagnostic fault information (PDTI) includes at least one suggested remedy (A1) pertaining to at least one fault code (DTC1) in addition to the current fault code (DTC2).

10. The system according to claim 9, in which the processing unit (155) is configured to calculate a respective probability rating for each suggested remedy (A1; A2) which pertains to a current fault code (DTC2), and
to rank the suggested remedies (A1, A2) in the diagnostic fault information (PDTI) in such a way that a suggested remedy (A1) which pertains to the current fault code (DTC2) and is of relatively high probability is given a higher ranking than a suggested remedy (A2) which pertains to the current fault code (DTC2) but is of relatively low probability.

11. A method for provision of diagnostic fault information (PDTI) concerning a motor vehicle (100), the method comprises
receiving from the vehicle (100) fault codes (DTC) each associated with a unique identity, and
providing the diagnostic fault information (PDTI) via an output interface (157), **characterised by**
retrieving from a database (153) at least one respective information item (C, A) pertaining to each fault code received (DTC), and
generating the diagnostic fault information (PDTI) dynamically on the basis of at least one fault code received (DTC) and at least one information item (C, A) thereto pertaining and,
if more than one fault code (DTC1, DTC2) is received from the vehicle (100) when two or more faults in the motor vehicle (100) occur at the same time, generating diagnostic fault information (PDTI) concerning a current fault code (DTC2) dynamically on the basis of at least one information item (C2, A2) pertaining to the current fault code (DTC2) and at least one information item (C1, A1) pertaining to at least one other of said fault codes received (DTC1) as well as on the basis of elimination of any redundant information overlapping from the two or more fault codes (DTC1, DTC2).

12. The method according to claim 11, which, if more than one fault code (DTC1, DTC2) is received from the vehicle (100), comprises
calculating a respective probability rating for each information item pertaining to a current fault code (DTC2), and
generating diagnostic fault information (PDTI) concerning a current fault code (DTC2) in such a way that information based on at least one information item which pertains to the current fault code (DTC2) and is of relatively high probability is given a higher ranking than information based on one or more information items which pertain to the current fault code (DTC2) but are of only relatively low probability.

13. The method according to claim 12, which, if two or more information items have the same calculated probability rating, comprises generating diagnostic fault information (PDTI) concerning a fault code (DTC2) incorporating said information items in such a way that the diagnostic fault information (PDTI) presented has its content ranked according to an a priori order of probability for said two or more information items.

14. The method according to claim 11, in which each of said information items comprises at least one suggested cause (CI;
C2) pertaining to respective fault codes (DTC1, DTC2) and the method comprises including in diagnostic fault information (PDTI) concerning a certain fault code (DTC1) at least one suggested cause (C1) which pertains to that fault code.

15. The method according to claim 14, which, if more than one fault code (DTC1, DTC2) is received from the vehicle (100), comprises generating diagnostic fault information (PDTI) concerning a current fault code (DTC2) in such a way that the diagnostic fault information (PDTI) includes at least one suggested cause (C1) pertaining to at least one fault code (DTC1) in addition to the current fault code (DTC2).

16. The method according to claim 15, further comprising
calculating a respective probability rating for each suggested cause (C1; C2) which pertains to a current fault code (DTC2), and
ranking the suggested causes in the diagnostic fault information (PDTI) in such a way that a suggested cause (C1) which pertains to the current fault code (DTC2) and is of relatively high probability is given a higher ranking than a suggested cause (C2) which pertains to the current fault code (DTC2) but is of relatively low probability.

17. The method according to claim 16, which, if two or more suggested causes (C1; C2) pertaining to a current fault code (DTC2) have the same calculated probability rating, comprises mutual ranking of said two or more suggested causes (C1; C2) in an a priori order of their probability.

18. The method according to claim 11, in which each of said information items comprises at least one suggested remedy (A1; A2) pertaining to current fault codes (DTC1, DTC2) and the method comprises including in diagnostic fault information (PDTI) concerning a certain fault code (DTC1) at least one suggested remedy (A1) pertaining to that fault code.

19. The method according to claim 18, which, if more than one fault code (DTC1, DTC2) is received from the vehicle (100), comprises generating diagnostic fault information (PDTI) concerning a current fault code (DTC2) in such a way that the diagnostic fault information (PDTI) includes at least one suggested remedy (A1) pertaining to at least one fault code (DTC1) in addition to the current fault code (DTC2).

20. The method according to claim 19, further comprising
calculating a respective probability rating for each suggested remedy (A1; A2) which pertains to a current fault code (DTC2), and
ranking the suggested remedies (A1, A2) in the diagnostic fault information (PDTI) in such a way that a suggested remedy (A1) which pertains to the current fault code (DTC2) and is of relatively high probability is given a higher ranking than a suggested remedy (A2) which pertains to the current fault code (DTC2) but is of relatively low probability.

21. A computer programme directly downloadable to the internal memory (M) of a computer and comprising software for controlling steps according to any one of claims 11 to 20 when said programme is run on the computer.

22. A computer-readable medium (M) which has stored on it a programme adapted to enabling a computer to control steps according to any one of claims 11 to 20.

## Patentansprüche

1. System zur Bereitstellung von ein Kraftfahrzeug (100) betreffender diagnostischer Fehlerinformation (PDTI), wobei das System eine Verarbeitungseinheit (155) aufweist, die dazu eingerichtet ist, Fehlercodes (DTC) von dem Fahrzeug (100) zu empfangen, wobei jeder empfangene Fehlercode (DTC) einer eindeutigen Identität zugeordnet ist, und die diagnostische Fehlerinformation (PDTI) über eine Ausgabeschnittstelle (157) bereitzustellen,
**dadurch gekennzeichnet, dass**
das System eine Datenbank (153) umfasst, die wenigstens eine Reihe von Informationsgegenständen (C, A) enthält, die jeder einen bestimmten Fehlercode (DTC) betreffen, und
die Verarbeitungseinheit (155) dazu eingerichtet ist, die diagnostische Fehlerinformation (PDTI) dynamisch auf der Basis wenigstens eines empfangenen Fehlercodes (DTC) und wenigstens eines ihn betreffenden Informationsgegenstands (C, A) aus der Datenbank (153) zu erzeugen, und
falls mehr als ein Fehlercode (DTC1, DTC2) von dem Fahrzeug (100) empfangen wird, wenn in dem Kraftfahrzeug (100) zwei oder mehr Fehler gleichzeitig auftreten, die Verarbeitungseinheit (155) dazu eingerichtet ist, einen aktuellen Fehlercode (DTC2) betreffende diagnostische Fehlerinformation (PDTI) dynamisch zu erzeugen auf der Basis wenigstens eines den aktuellen Fehlercode (DTC2) betreffenden Informationsgegenstands (C2, A2) und wenigstens eines zumindest einen anderen der empfangenen Fehlercodes betreffenden Informationsgegenstands (C1, A1) sowie auf der Basis einer Eliminierung jeglicher redundanter, sich aus den zwei oder mehr Fehlercodes (DTC1, DTC2) überlappender Information.

2. System nach Anspruch 1, bei dem dann, wenn mehr als ein Fehlercode (DTC1, DTC2) von dem Fahrzeug (100) empfangen wird, die Verarbeitungseinheit (155) dazu eingerichtet ist,
eine entsprechende Wahrscheinlichkeitseinstufung für jeden einen aktuellen Fehlercode (DTC2) betreffenden Informationsgegenstand zu berechnen, und
einen aktuellen Fehlercode (DTC2) betreffende diagnostische Fehlerinformation (PDTI) solchermaßen zu erzeugen, dass Information, welche auf wenigstens einem den aktuellen Fehlercode (DTC2) betreffenden Informationsgegenstand basiert und eine relativ hohe Wahrscheinlichkeit hat, eine höhere Rangordnung gegeben wird als Information, die auf einem oder mehreren den aktuellen Fehlercode (DTC2) betreffenden Informationsgegenständen basiert, die jedoch nur eine relativ geringe Wahrscheinlichkeit haben.

3. System nach Anspruch 2, bei dem dann, falls zwei oder mehr Informationsgegenstände die gleiche berechnete Wahrscheinlichkeitseinstufung haben, die Verarbeitungseinheit (155) dazu eingerichtet ist, einen Fehlercode (DTC2) betreffende diagnostische Fehlerinformation (PDTI) zu erzeugen unter Einschluss dieser Informationsgegenstände solchermaßen, dass die präsentierte diagnostische Fehlerinformation (PDTI) ihren Inhalt gemäß einer A-priori-Wahrscheinlichkeitsreihenfolge für die zwei oder mehreren Informationsgegenstände angeordnet hat.

4. System nach Anspruch 1, bei dem jeder der Informationsgegenstände wenigstens eine zugehörige Fehlercodes (DTC1, DTC2) betreffende vorgeschlagene Ursache (C1; C2) umfasst und die Verarbeitungseinheit (155) dazu eingerichtet ist, in die einen bestimmten Fehlercode (DTC1) betreffende diagnostische Fehlerinformation (PDTI) wenigstens eine diesen Fehlercode betreffende vorgeschlagene Ursache (C1) einzuschließen.

5. System nach Anspruch 4, bei dem dann, wenn mehr als ein Fehlercode (DTC1, DTC2) von dem Fahrzeug (100) empfangen wird, die Verarbeitungseinheit (155) dazu eingerichtet ist, einen aktuellen Fehlercode (DTC2) betreffende diagnostische Fehlerinformation (ODTI) solchermaßen zu erzeugen, dass die diagnostische Fehlerinformation (PDTI) wenigstens eine vorgeschlagene Ursache (C1) enthält, die zusätzlich zu dem aktuellen Fehlercode (DTC2) wenigstens einen Fehlercode (DTC1) betrifft.

6. System nach Anspruch 5, wobei die Verarbeitungseinheit (155) dazu eingerichtet ist
eine entsprechende Wahrscheinlichkeitseinstufung für jede vorgeschlagene Ursache (C1; C2) zu berechnen, welche einen aktuellen Fehlercode (DTC2) betrifft, und
die vorgeschlagenen Ursachen in die diagnostische Fehlerinformation (PDTI) solchermaßen einzuordnen, dass einer vorgeschlagenen Ursache (C1), die den aktuellen Fehlercode (DTC2) betrifft und die eine relativ hohe Wahrscheinlichkeit hat, eine höhere Rangordnung gegeben wird als einer vorgeschlagenen Ursache (C2), die den aktuellen Fehlercode (DTC2) betrifft, jedoch eine relativ geringe Wahrscheinlichkeit hat.

7. System nach Anspruch 6, in dem dann, wenn zwei oder mehr einen aktuellen Fehlercode (DTC2) betreffende vorgeschlagene Ursachen (C1; C2) die gleiche berechnete Wahrscheinlichkeitseinstufung haben,
die Verarbeitungseinheit (155) dazu eingerichtet ist, die zwei oder mehr vorgeschlagenen Ursachen (C1; C2) gemeinsam in einer A-priori-Reihenfolge ihrer Wahrscheinlichkeit einzuordnen.

8. System nach Anspruch 1, in dem jeder der Informationsgegenstände wenigstens eine vorgeschlagene Abhilfemaßnahme (A1; A2) umfasst, die entsprechende Fehlercodes (DTC1, DTC2) betrifft, und die Verarbeitungseinheit (155) dazu eingerichtet ist, in die einen bestimmten Fehlercode (DTC1) betreffende diagnostische Fehlerinformation (PDTI) wenigstens eine vorgeschlagene Abhilfemaßnahme (A1) einzuschließen, die diesen Fehlercode betrifft.

9. System nach Anspruch 8, bei dem dann, falls mehr als ein Fehlercode (DTC1, DTC2) von dem Fahrzeug empfangen wird, die Verarbeitungseinheit (155) dazu eingerichtet ist, einen aktuellen Fehlercode (DTC2) betreffende diagnostische Fehlerinformation (PDTI) solchermaßen zu erzeugen, dass die diagnostische Fehlerinformation (PDTI) wenigstens eine vorgeschlagene Abhilfemaßnahme (A1) enthält, die zusätzlich zu dem aktuellen Fehlercode (DTC2) mindestens einen Fehlercode (DTC1) betrifft.

10. System nach Anspruch 9, wobei die Verarbeitungseinheit (155) dazu eingerichtet ist
für jede vorgeschlagene Abhilfemaßnahme (A1; A2), die einen aktuellen Fehlercode (DTC2) betrifft, eine entsprechende Wahrscheinlichkeitseinstufung zu berechnen, und
die vorgeschlagenen Abhilfemaßnahmen (A1, A2) in die diagnostische Fehlerinformation (PDTI) solchermaßen einzuordnen, dass einer vorgeschlagenen Abhilfemaßnahme (A1), die den aktuellen Fehlercode (DTC2) betrifft und die eine relativ hohe Wahrscheinlichkeit hat, eine höhere Rangordnung gegeben wird als einer vorgeschlagenen Abhilfemaßnahme (A2), die den aktuellen Fehlercode (DTC2) betrifft, jedoch eine relativ geringe Wahrscheinlichkeit hat.

11. Verfahren zur Bereitstellung von ein Kraftfahrzeug (100) betreffender diagnostischer Fehlerinformation (PDTI), wobei das Verfahren umfasst
Empfangen von Fehlercodes (DTC) von dem Fahrzeug (100), von denen jeder einer eindeutigen Identität zugeordnet ist, und
Bereitstellen der diagnostischen Fehlerinformation (PDTI) über eine Ausgabeschnittstelle (157),
**gekennzeichnet durch**
Abrufen zumindest eines jeden empfangenen Fehlercode (DTC) betreffenden Informationsgegenstands (C, A) aus einer Datenbank (153), und
dynamisches Erzeugen der diagnostischen Fehlerinformation (PDTI) basierend auf wenigstens einem empfangenen Fehlercode (DTC) und wenigstens einem ihn betreffenden Informationsgegenstand (C, A), und
falls mehr als ein Fehlercode (DTC1, DTC2) von dem Fahrzeug (100) empfangen werden, wenn in dem Kraftfahrzeug (100) zwei oder mehr Fehler gleichzeitig auftreten, dynamisches Erzeugen von einen aktuellen Fehlercode (DTC2) betreffender diagnostischer Fehlerinformation (PDTI) basierend auf wenigstens einem Informationsgegenstand (C2, A2), der den aktuellen Fehlercode (DTC2) betrifft, und wenigstens einem Informationsgegenstand (C1, A1), der wenigstens einen anderen der empfangenen Fehlercodes (DTC1) betrifft, sowie auf der Basis einer Eliminierung jeglicher redundanter, sich aus den zwei oder mehr Fehlercodes (CDT1, DTC2) überlappender Information.

12. Verfahren nach Anspruch 11, welches umfasst, falls mehr als ein Fehlercode (DTC1, DTC2) von dem Fahrzeug (100) empfangen wird,
Berechnen einer entsprechenden Wahrscheinlichkeitseinstufung für jeden einen aktuellen Fehlercode (DTC2) betreffenden Informationsgegenstand, und
Erzeugen von einen aktuellen Fehlercode (DTC2) betreffender diagnostischer Fehlerinformation (PDTI) solchermaßen, dass einer Information, die auf wenigstens einem Informationsgegenstand basiert, der den aktuellen Fehlercode (DTC2) betrifft und eine relativ hohe Wahrscheinlichkeit hat, eine höhere Rangordnung gegeben wird als einer Information, die auf einem oder mehreren Informationsgegenständen basiert, die den aktuellen Fehlercode (DTC2) betreffen, jedoch nur eine relativ geringe Wahrscheinlichkeit haben.

13. Verfahren nach Anspruch 12, welches umfasst, falls zwei oder mehr Informationsgegenstände die gleiche berechnete Wahrscheinlichkeitseinstufung haben, ein Erzeugen einen Fehlercode (DTC2) betreffender diagnostischer Fehlerinformation (PDTI), welche diese Informationsgegenstände solchermaßen einschließt, dass die präsentierte diagnostische Fehlerinformation ((PDTI) ihren Inhalt gemäß einer A-priori-Wahrscheinlichkeitsreihenfolge für die zwei oder mehr Informationsgegenstände eingeordnet hat.

14. Verfahren nach Anspruch 11, bei dem jeder der Informationsgegenstände wenigstens eine vorgeschlagene Ursache (C1; C2) umfasst, die entsprechende Fehlercodes (DTC1, DTC2) betrifft, und das Verfahren umfasst ein Einschließen in die einen bestimmten Fehlercode (DTC1) betreffende diagnostische Fehlerinformation (PTDI) wenigstens einer diesen Fehlercode betreffenden vorgeschlagenen Ursache (C1).

15. Verfahren nach Anspruch 14, welches umfasst, falls mehr als ein Fehlercode (DTC1, DTC2) von dem Fahrzeug (100) empfangen wird, ein Erzeugen einer einen aktuellen Fehlercode (DTC2) betreffenden diagnostischen Fehlerinformation (PDTI) solchermaßen, dass die diagnostische Fehlerinformation (PDTI) wenigstens eine vorgeschlagene Ursache (C1) enthält, die zusätzlich zu dem aktuellen Fehlercode (DTC2) mindestens einen Fehlercode (DTC1) betrifft.

16. Verfahren nach Anspruch 15, ferner umfassend
Berechnen einer entsprechenden Wahrscheinlichkeitseinstufung für jede vorgeschlagene Ursache (C1; C2), die einen aktuellen Fehlercode (DTC2) betrifft, und
Einordnen der vorgeschlagenen Ursachen in die diagnostische Fehlerinformation (PDTI) solchermaßen, dass einer vorgeschlagenen Ursache (C1), die den aktuellen Fehlercode (DTC2) betrifft und eine relativ hohe Wahrscheinlichkeit hat, eine höhere Rangordnung gegeben wird als einer vorgeschlagenen Ursache (C2), die den aktuellen Fehlercode (DTC2) betrifft, jedoch eine relativ geringe Wahrscheinlichkeit hat.

17. Verfahren nach Anspruch 16, welches umfasst, falls zwei oder mehr einen aktuellen Fehlercode (DTC2) betreffende vorgeschlagene Ursachen (C1; C2) die gleiche berechnete Wahrscheinlichkeitseinstufung haben, ein gemeinsames Einordnen der zwei oder mehr vorgeschlagenen Ursachen (C1; C2) in einer A-priori-Reihenfolge ihrer Wahrscheinlichkeit.

18. Verfahren nach Anspruch 11, bei dem jeder Informationsgegenstand wenigstens eine vorgeschlagene Abhilfemaßnahme (A1; A2) umfasst, die aktuelle Fehlercodes (DTC1, DTC2) betrifft, und das Verfahren umfasst ein Einschließen in einen bestimmten Fehlercode (DTC1) betreffende diagnostische Fehlerinformation (PDTI) wenigstens eine vorgeschlagene Abhilfemaßnahme (A1), die diesen Fehlercode betrifft.

19. Verfahren nach Anspruch 18, welches umfasst, falls mehr als ein Fehlercode (DTC1, DTC2) von dem Fahrzeug (100) empfangen wird, ein Erzeugen einer einen aktuellen Fehlercode (DTC2) betreffenden diagnostischen Fehlerinformation (PDTI) solchermaßen, dass die diagnostische Fehlerinformation (PDTI) wenigstens eine vorgeschlagene Abhilfemaßnahme (A1) enthält, die zusätzlich zu dem aktuellen Fehlercode (DTC2) mindestens einen Fehlercode (DTC1) betrifft.

20. Verfahren nach Anspruch 19, ferner umfassend
Berechnen einer entsprechenden Wahrscheinlichkeitseinstufung für jede vorgeschlagene Abhilfemaßnahme (A1; A2), die einen aktuellen Fehlercode (DTC2) betrifft, und
Einordnen der vorgeschlagenen Abhilfemaßnahmen (A1, A2) in die diagnostische Fehlerinformation (PDTI) solchermaßen, dass einer vorgeschlagenen Abhilfemaßnahme (A1), die den aktuellen Fehlercode (DTC2) betrifft und eine relativ hohe Wahrscheinlichkeit hat, eine höhere Rangordnung gegeben wird als einer vorgeschlagenen Abhilfemaßnahme (A2), die den aktuellen Fehlercode (DTC2) betrifft, jedoch eine relativ geringe Wahrscheinlichkeit hat.

21. Computerprogramm, welches unmittelbar in den internen Speicher (M) eines Computers herunterladbar ist und Software umfasst zum Steuern von Schritten nach einem der Ansprüche 11 bis 20, wenn das Programm auf dem Computer ausgeführt wird.

22. Computerlesbares Medium (M), das auf sich ein Programm gespeichert hat, welches dazu eingerichtet ist, einem Computer zu ermöglichen, Schritte nach einem der Ansprüche 11 bis 20 zu steuern.

## Revendications

1. Système pour fournir des informations de diagnostic de défauts (PDTI) concernant un véhicule motorisé (100), le système comprend une unité de traitement (155) configurée pour recevoir des codes de défaut (DTC) du véhicule (100), chaque code de défaut reçu (DTC) étant associé à une identité unique, et pour fournir les informations de diagnostic de défauts (PDTI) via une interface de sortie (157),
**caractérisé en ce que**
le système comprend une base de données (153) contenant au moins une série d'éléments d'information (C, A) qui se rapportent chacun à un certain code de défaut (DTC), et
l'unité de traitement (155) est configurée pour générer des informations de diagnostic de défauts (PDTI) de manière dynamique sur la base d'au moins un code de défaut reçu (DTC) et d'au moins un élément d'information (C, A) qui s'y rapporte à partir de la base de données (153) et,
si plus d'un code de défaut (DTC1, DTC2) est reçu à partir du véhicule (100) lorsque deux défauts ou plus du véhicule motorisé (100) se produisent en même temps, l'unité de traitement (155) est configurée pour générer des informations de diagnostic de défauts (PDTI) concernant un code de défaut actuel (DTC2) de manière dynamique sur la base d'au moins un élément d'information (C2, A2) se rapportant au code de défaut actuel (DTC2) et d'au moins un élément d'information (C1, A1) se rapportant à au moins un autre desdits codes de défaut reçus (DTC1) de même que sur la base de l'élimination d'une quelconque information redondante faisant double emploi à partir des deux codes de défaut ou plus (DTC1, DTC2).

2. Système selon la revendication 1, dans lequel si plus d'un code de défaut (DTC1, DTC2) est reçu à partir du véhicule (100), l'unité de traitement (155) est configurée
pour calculer une évaluation de probabilité respective pour chaque élément d'information se rapportant à un code de défaut actuel (DTC2), et
pour générer des informations de diagnostic de défauts (PDTI) concernant un code de défaut actuel (DTC2) de telle manière que les informations basées sur au moins une information qui se rapporte au code de défaut actuel (DTC2) et qui sont de probabilité relativement élevée reçoivent un rang plus élevé que les informations basées sur un ou plusieurs éléments d'information qui se rapportent au code de défaut actuel (DTC2) mais qui sont de probabilité relativement faible.

3. Système selon la revendication 2, dans lequel si deux éléments d'information ou plus ont la même cote de probabilité calculée, l'unité de traitement (155) est configurée pour générer des informations de diagnostic de défauts (PDTI) concernant un code de défaut (DTC2) incorporant lesdits éléments d'information d'une telle manière que les informations de diagnostic de défauts (PDTI) présentées ont leur contenu classé selon un ordre de probabilité a priori pour lesdits deux éléments d'information ou plus.

4. Système selon la revendication 1, dans lequel chacun desdits éléments d'information comprend au moins une cause suggérée (C1 ; C2) se rapportant aux codes de défaut respectifs (DTC1, DTC2), et l'unité de traitement (155) est configurée pour inclure dans les informations de diagnostic de défauts (PDTI) concernant un certain code de défaut (DTC1) au moins une cause suggérée (C1) se rapportant à ce code de défaut.

5. Système selon la revendication 4, dans lequel si plus d'un code de défaut (DTC1, DTC2) est reçu à partir du véhicule (100), l'unité de traitement (155) est configurée pour générer des informations de diagnostic de défauts (PDTI) concernant un code d'erreur actuel (DTC2) de telle manière que les informations de diagnostic de défauts (PDTI) incluent au moins une cause suggérée (C1) se rapportant à au moins un code de défaut (DTC1) en plus du code de défaut actuel (DTC2).

6. Système selon la revendication 5, dans lequel l'unité de traitement (155) est configurée
pour calculer une cote de probabilité respective pour chaque cause suggérée (C1 ; C2) qui se rapporte à un code de défaut actuel (DTC2), et
pour classer les causes suggérées dans les informations de diagnostic de défauts (PDTI) de telle manière qu'une cause suggérée (C1) qui se rapporte au code de défaut actuel (DTC2) et qui est de probabilité relativement élevée reçoive un classement plus élevé qu'une cause suggérée (C2) qui se rapporte au code de défaut actuel (DTC2) mais est de probabilité relativement faible.

7. Système selon la revendication 6, dans lequel si deux causes suggérées ou plus (C1 ; C2) se rapportant à un code de défaut actuel (DTC2) ont la même valeur de probabilité calculée,
l'unité de traitement (155) est configurée pour classer mutuellement lesdites deux causes suggérées ou plus (C1 ; C2) dans un ordre a priori de leur probabilité.

8. Système selon la revendication 1, dans lequel chacun desdits éléments d'information comprend au moins un remède suggéré (A1 ; A2) se rapportant aux codes de défaut respectifs (DTC1, DTC2), et l'unité de traitement (155) est configurée pour inclure dans les informations de diagnostic de défauts (PDTI) concernant un certain code de défaut (DTC1) au moins un remède suggéré (A1) qui se rapporte à ce code de défaut.

9. Système selon la revendication 8, dans lequel si plus d'un code de défaut (DTC1, DTC2) est reçu à partir du véhicule (100), l'unité de traitement (155) est configurée pour générer des informations de diagnostic de défauts (PDTI) concernant un code d'erreur actuel (DTC2) de telle manière que les informations de diagnostic de défauts (PDTI) incluent au moins un remède suggéré (A1) se rapportant à au moins un code de défaut (DTC1) en plus du code de défaut actuel (DTC2).

10. Système selon la revendication 9, dans lequel l'unité de traitement (155) est configurée
pour calculer une cote de probabilité respective pour chaque remède suggéré (A1 ; A2) qui se rapporte à un code de défaut actuel (DTC2), et
pour classer les remèdes suggérés (A1, A2) dans les informations de diagnostic de défauts (PDTI) de telle manière qu'un remède suggéré (A1) qui se rapporte au code de défaut actuel (DTC2) et qui est de probabilité relativement élevée reçoive un classement supérieur à un remède suggéré (A2) qui se rapporte au code de défaut actuel (DTC2) mais qui est de probabilité relativement faible.

11. Procédé de fourniture d'informations de diagnostic de défauts (PDTI) concernant un véhicule motorisé (100), le procédé comprend
la réception à partir du véhicule (100) de codes de défaut (DTC) chacun associé à une identité unique, et
la fourniture d'informations de diagnostic de défauts (PDTI) via une interface de sortie (157), **caractérisée par**
la récupération d'une base de données (153) d'au moins un élément d'information respectif (C, A) se rapportant à chaque code de défaut reçu (DTC), et
la génération de l'information de diagnostic de défauts (PDTI) de manière dynamique sur la base d'au moins un code de défaut reçu (DTC) et d'au moins un élément d'information (C, A) qui s'y rapporte et,
si plus d'un code de défaut (DTC1, DTC2) est reçu à partir du véhicule (100) lorsque deux défauts ou plus du véhicule motorisé (100) se produisent en même temps, la génération d'informations de diagnostic de défauts (PDTI) concernant un code de défaut actuel (DTC2) de manière dynamique sur la base d'au moins un élément d'information (C2, A2) se rapportant au code de défaut actuel (DTC2) et d'au moins un élément d'information (C1, A1) se rapportant à au moins un autre desdits codes de défaut reçus (DTC1) de même que sur la base de l'élimination d'une quelconque information redondante faisant double emploi à partir des deux codes de défaut ou plus (DTC1, DTC2).

12. Procédé selon la revendication 11, qui, si plus d'un code de défaut (DTC1, DTC2) est reçu à partir du véhicule (100), comprend
le calcul d'une cote de probabilité respective pour chaque élément d'information se rapportant à un code de défaut actuel (DTC2), et
la génération d'informations de diagnostic de défauts (PDTI) concernant un code de défaut actuel (DTC2) de telle manière que ces informations basées sur au moins un élément d'information qui se rapporte au code de défaut actuel (DTC2) et qui sont de probabilité relativement élevée reçoivent un classement plus élevé que des informations basées sur un ou plusieurs éléments d'information qui se rapportent au code de défaut actuel (DTC2) mais qui sont de probabilité relativement faible.

13. Procédé selon la revendication 12, qui, si deux éléments d'information ou plus ont la même cote de probabilité calculée, comprend la génération d'informations de diagnostic de défauts (PDTI) concernant un code de défaut (DTC2) incorporant lesdits éléments d'information d'une telle manière que les informations de diagnostic de défauts (PDTI) présentées ont leur contenu classé selon un ordre de probabilité a priori pour lesdits deux éléments d'information ou plus.

14. Procédé selon la revendication 11, dans lequel chacun desdits éléments d'information comprend au moins une cause suggérée (C1 ; C2) se rapportant aux codes de défaut respectifs (DTC1, DTC2), et le procédé comprend l'inclusion dans les informations de diagnostic de défauts (PDTI) concernant un certain code de défaut (DTC1) d'au moins une cause suggérée (C1) se rapportant à ce code de défaut.

15. Procédé selon la revendication 14, qui, si plus d'un code de défaut (DTC1, DTC2) est reçu à partir du véhicule (100), comprend la génération d'informations de diagnostic de défauts (PDTI) concernant un code d'erreur actuel (DTC2) de telle manière que les informations de diagnostic de défauts (PDTI) incluent au moins une cause suggérée (C1) se rapportant à au moins un code de défaut (DTC1) en plus du code de défaut actuel (DTC2).

16. Procédé selon la revendication 15, comprenant en outre
le calcul d'une une cote de probabilité respective pour chaque cause suggérée (A1 ; A2) qui se rapporte à un code de défaut actuel (DTC2), et
le classement des causes suggérées dans les informations de diagnostic de défauts (PDTI) de telle manière qu'une cause suggérée (C1) qui se rapporte au code de défaut actuel (DTC2) et qui est de probabilité relativement élevée reçoive un classement plus élevé qu'une cause suggérée (C2) qui se rapporte au code de défaut actuel (DTC2) mais est de probabilité relativement faible.

17. Procédé selon la revendication 16, qui, si deux causes suggérées ou plus (C1 ; C2) relatives à un code de défaut actuel (DTC2) ont la même valeur de probabilité calculée, comprend un classement mutuel desdites deux causes suggérées ou plus (C1 ; C2) dans une ordre a priori de leur probabilité.

18. Procédé selon la revendication 11, dans lequel chacun desdits éléments d'information comprend au moins un remède suggéré (A1 ; A2) se rapportant aux codes de défaut actuels (DTC1, DTC2) et le procédé comprend l'inclusion dans les informations de diagnostic de défauts (PDTI) concernant un certain code de défaut (DTC1), d'au moins un remède suggéré (A1) se rapportant à ce code de défaut.

19. Procédé selon la revendication 18, qui, si plus d'un code de défaut (DTC1, DTC2) est reçu à partir du véhicule (100), comprend la génération d'informations de diagnostic de défauts (PDTI) concernant un code de défaut actuel (DTC2) de telle manière que les informations de diagnostic de défauts (PDTI) incluent au moins un remède suggéré (A1) se rapportant à au moins un code de défaut (DTC1) en plus du code de défaut actuel (DTC2).

20. Procédé selon la revendication 19, comprenant en outre
le calcul d'une cote de probabilité respective pour chaque remède suggéré (A1 ; A2) qui se rapporte à un code de défaut actuel (DTC2), et
le classement des remèdes suggérés (A1, A2) dans les informations de diagnostic de défauts (PDTI) de telle manière qu'un remède suggéré (A1) qui se rapporte au code de défaut actuel (DTC2) et qui soit de probabilité relativement élevée reçoive un classement plus élevé qu'un remède suggéré (A2) qui se rapporte au code de défaut actuel (DTC2) mais qui est de probabilité relativement faible.

21. Programme informatique téléchargeable directement dans la mémoire interne (M) d'un ordinateur et comprenant un logiciel pour le contrôle des étapes selon l'une quelconque des revendications 11 à 20 lorsque ledit programme est exécuté sur l'ordinateur.

22. Support lisible par ordinateur (M) sur lequel est stocké un programme adapté pour permettre à un ordinateur de contrôler des étapes selon l'une quelconque des revendications 11 à 20.
